# EUROPEAN PATENT APPLICATION

(11) **EP 1 453 328 A1**
(43) Date of publication of application: **01.09.2004**
(21) Application number: 04100485.4
(22) Date of filing: 10.02.2004
(51) Int. Cl.: H04Q 7/22

(54) **System and method for routing of messages**

(30) Priority: 25.02.2003 FI 20030278
(71) Applicant: TeliaSonera Finland Oyj, 00510 Helsinki (FI)
(72) Inventor: Hämäläinen, Jori, 33230 Tampere (FI); Mattila, Panu, 33730 Tampere (FI)
(74) Representative: Holmström, Stefan Mikael

(57) **Abstract**

The present invention relates to a telecommunication system comprising message centres (MMSC1 to MMSC4) which provide subscribers with message services, subscriber registers (HLR1 to HLR4) to maintain subscriber information, and a signalling network (SS7) connected to the subscriber registers. When a number portability service is in use, to route messages the system further comprises: a signalling gateway (SGW) which, in response to a received subscriber identifier, performs an interrogation to the subscriber registers (HLR1 to HLR4) through the signalling network to identify a network of a subscriber corresponding to the particular subscriber identifier, and a gateway (MMSGW) which relays messages between the message centres (MMSC1 to MMSC4) and which, to route the message to a correct message centre, performs an interrogation to the signalling gateway (SGW) in response to receiving a message including a receiver's subscriber identifier to identify a network of a subscriber corresponding to the subscriber identifier, and sends the message to a message centre (MMSC4) of the identified network.

## Description

### FIELD OF THE INVENTION

The present invention relates to routing of messages in a telecommunication system which uses a number portability (Mobile Number Portability, MNP) service. In the following, the invention will be described by referring to routing of multimedia messages in particular. It is to be noted, however, that the present invention is also applicable to other messages.

### DESCRIPTION OF PRIOR ART

In systems wherein a number portability service is used, it is possible for a mobile subscriber to change operators without therefore being compelled to change his or her telephone number, i.e. Mobile Station International ISDN or MSISDN number. Consequently, the operator of a mobile subscriber can no longer be identified on the basis of the MSISDN number, i.e. the telephone number. This causes problems in routing of multimedia messages in particular. This is because the known solutions for routing multimedia messages are based particularly on the fact that multimedia messages include the subscriber identifier, i.e. the telephone number, of the receiver. A multimedia centre sending a multimedia message identifies, on the basis of the subscriber identifier, the operator of the receiving subscriber and, at the same time, the network whereto the multimedia message is to be sent. When the number portability service is in use, such a routing of multimedia messages no longer works since the subscriber identifier no longer indicates with certainty the network whereto a multimedia message is to be sent.

### SUMMARY OF THE INVENTION

An object of the present invention is to solve the above-described problem and provide a solution to enable messages to be routed to a correct destination in a telecommunication system providing a number portability service. This object is achieved by a method according to independent claim 1, a telecommunication system according to independent claim 3, and a gateway according to independent claim 6.

The idea underlying the invention is to enable messages to be easily and reliably routed to their correct destination by utilizing a gateway which routes messages through a signalling network on the basis of information retrieved from subscriber registers. Since the subscriber registers already in the known solutions include information indicating which subscribers belong to a particular subscriber register, and thus to a corresponding network and message centre, in accordance with the invention, this information may be utilized in routing of messages. Finding out the correct subscriber register means finding out the network whereto the message is to be routed. A signalling network which, from the subscriber registers communicating therewith, is able to find out the subscriber register of a subscriber corresponding to the subscriber identifier included in the message is utilized for identifying the correct subscriber register. Consequently, the subscriber register and network of the receiver can be identified also when the number portability service is in use by utilizing information contained in the already existing subscriber registers as well as properties of the already existing signalling network. The invention is thus easy to implement in practice. In the solution of the invention, more than one operator may utilize the same gateway, thus enabling redundant equipment to be avoided when using a number portability service.

Preferred embodiments of the method, telecommunication system and gateway of the invention are disclosed in the accompanying dependent claims 2, 4, 5 and 7.

### BRIEF DESCRIPTION OF THE DRAWINGS

In the following, the invention will be described by way of example and with reference to the accompanying drawings, in which:

Figure 1 is a block diagram showing a first preferred embodiment of a telecommunication system of the invention, and

Figure 2 illustrates the operation of different parts of a telecommunication system in connection with sending a multimedia message.

### DESCRIPTION OF PREFERRED EMBODIMENTS

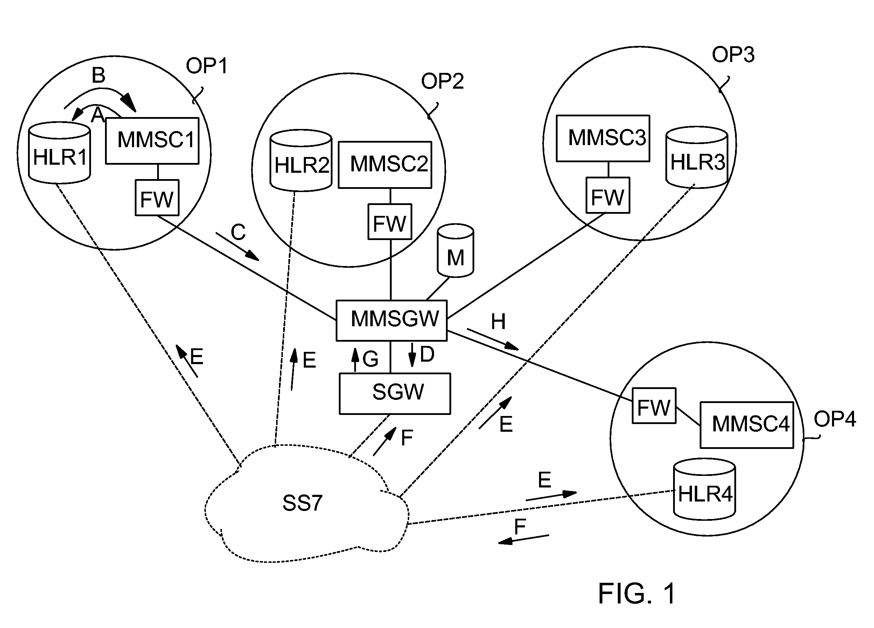

Figure 1 is a block diagram showing a first preferred embodiment of the telecommunication system of the invention. Figure 1 only shows parts of the telecommunication system necessary for understanding the invention. A part of the telecommunication system of Figure 1 may consist e.g. of a part of a Global System for Mobile communications or GSM system.

According to the invention, message centres MMSC1 to MMSC4 belonging to networks OP1 to OP4 of different operators are interconnected via operator-specific firewalls FW and a gateway MMSGW. In the exemplary case of Figure 1, each operator is provided with a subscriber database HLR1 to HLR4 of its own wherein the operators maintain information on mobile subscribers of their own network. When the message centres are multimedia message centres and the gateway is a multimedia gateway relaying messages between the multimedia centres, a Simple Mail Transfer Protocol or SMTP protocol may be used between the centres and the gateway. This enables tools previously known from the Internet to be utilized for relaying messages. Typically, multimedia messages are simple e-mail messages whose size is below 100 kB and whose format may be e.g. Synchronized Multimedia Integration Language or SMIL.

In the case of Figure 1, a signalling gateway SGW operates in connection with a gateway MMSGW relaying multimedia messages between message centres of different operators, the gateway MMSGW utilizing the signalling gateway SGW for routing of messages in a manner to be described below. In practice, the gateway MMSGW and the signalling gateway SGW may be implemented by a computer program to be run in one or more servers. When the gateway MMSGW and the signalling gateway SGW are implemented by computer programs run in more than one server, the interface of these servers may be e.g. a Transmission Control Protocol/Internet Protocol or TCP/IP.

In conventional solutions, the telephone numbers, i.e. the MSISDN identifiers, of subscribers have consisted of a country code (e.g. 358 = Finland), an operator identifier (e.g. 40 = Sonera, 50 = Radiolinja), and a consecutive number (e.g. 1234567). Consequently, on the basis of examining such a telephone number of a subscriber 358401234567, it has been possible to directly identify that the subscriber is a subscriber to Sonera. The system of Figure 1, however, uses a number portability service. Consequently, a mobile subscriber who has previously been a subscriber to a network OP1 may now switch to become a subscriber to a network OP2 without the telephone number of the mobile subscriber changing. In such a case, information on the particular subscriber is removed from a subscriber database HLR1 of the first network OP1 and added to a subscriber database HLR2 of the second network OP2. When a multimedia message including the subscriber identifier (i.e. telephone number) of the receiver is sent to such a subscriber, the subscriber identifier no longer indicates to which operator's network the particular multimedia message is to be routed.

In the present invention, the message centres MMSC1 to MMSC4 do not necessarily have to be provided with a message routing property, but the message centres may be programmed to automatically send received messages to a gateway MMSGW via a firewall FW. It is, however, advantageous that the message centres, prior to relaying a message to the gateway, check the subscriber database of their own network to ensure that the receiver of the message is not a subscriber to the particular network, and only thereafter send the message to the gateway.

In the following, a method of the invention for routing a subscriber identifier in the system of Figure 1 after the message centre MMSC1 has received a multimedia message which includes a subscriber identifier 358401234567 will be illustrated. Firstly, the message centre checks A from the subscriber database HLR1 of its own operator whether or not the subscriber is a subscriber to the network OP1. A response B relayed from the subscriber database HLR1 indicates that this is not the case. The message centre MMSC1 then sends C the multimedia message including the subscriber identifier to the gateway MMSGW. At this stage the multimedia message does not indicate to which network the particular message is to be sent.

After the gateway MMSGW has received the message whose receiver's subscriber identifier is known but network unknown, the gateway sends D an interrogation to the signalling gateway SGW to find out the network of the particular subscriber. The signalling gateway relays E this interrogation further to the subscriber registers via a signalling network SS7. In the case of Figure 1, it has been assumed by way of example that the signalling network is a Signaling System 7 or SS7 signalling network known per se, utilized by prior art telephone systems. It is assumed in the exemplary case of Figure 1 that the subscriber database of the subscriber corresponding to the subscriber identifier 358401234567 is a subscriber database HLR4. Consequently, the multimedia message should be sent to a network OP4. Via the signalling network SS7, the subscriber database HLR4 sends a message F indicating this to the signalling gateway SGW which, in turn, relays G the information to the gateway MMSGW. The information relayed to the gateway may consist e.g. of an International Mobile Subscriber Identity or IMSI identifier of the subscriber, retrieved e.g. from the subscriber database HLR4. The IMSI identifier has three parts, thus comprising:
1) a Mobile Country Code or MCC,
2) a Mobile Network Code or MNC, and
3) a Mobile Station Identification Number or MSIN.
The gateway, on the basis of the MCC and MNC identifiers, is thus able to identify that the multimedia message is to be routed to the message centre MMSC4 of the network OP4, in which case it sends H the multimedia message to the message centre OP4 via the firewall FW.

The gateway of Figure 1 comprises a memory M wherein contract rules concerning relaying of messages between message centres of different operators may be operator-specifically defined and stored by the operators of the networks OP1 to OP4 through a user interface. The operator of the network OP1 may define in this memory e.g. that it is allowed to relay messages between the message centre OP1 of the particular operator and the message centres of the networks OP2 and OP4. Prior to sending a message, the gateway MMSGW checks, on the basis of the contents of the particular memory, whether or not it is allowed to send a certain message. Only if it is allowed, the gateway MMSGW sends the message further. A prerequisite to allowing a message to be sent is that the operators of both networks have, in the memory M, defined contract rules allowing the particular message to be relayed. In other words, it will not suffice that the operator of the network OP1 allows messages to be relayed to the message centre of the operator of the network OP4, but also the operator of the network OP4 has to define contract rules in the memory M that allow messages to be relayed to the message centre of the operator of the network OP1. This preferred embodiment of the invention simplifies considerably the compliance and management of contract rules of different operators. For this purpose it will suffice that the contract rules are provided in a single, centralized memory M so that it is unnecessary for each operator to maintain contract rules of its own e.g. in connection with firewalls to manage the relaying of messages between different networks.

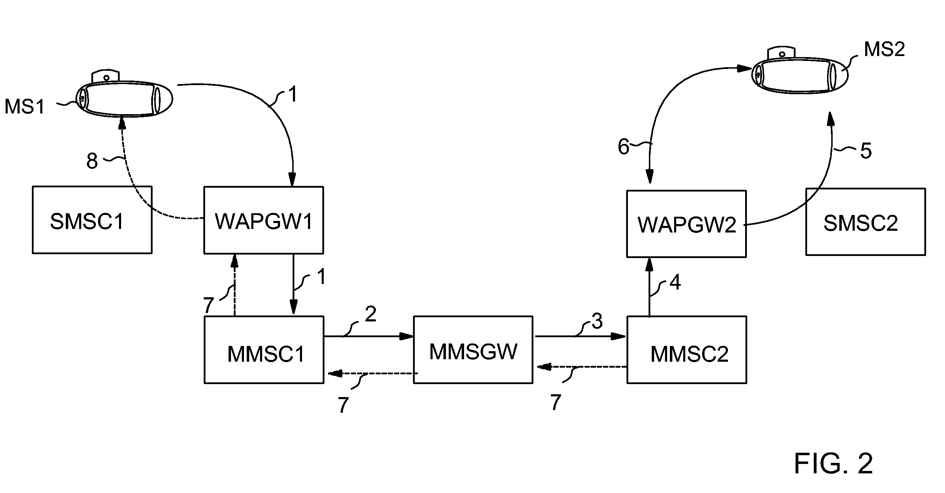

Figure 2 illustrates the operation of different parts of a telecommunication system in connection with sending a multimedia message. In a similar manner to that in the case of Figure 1, the telecommunication system of Figure 2 may be e.g. a part of a GSM system.

In the case of Figure 2 it is assumed that a multimedia message which includes the identifier of a receiving mobile station MS2 is sent from a mobile station MS1. The mobile station MS1 thus sends 1 the message e.g. via a General Packet Radio System or GPRS connection through the network of the particular operator so that the message arrives at the message centre MMSC1 via a WAP gateway Wireless Application Protocol Push Proxy GW or WAPGW1.

After checking, the message centre MMSC1 finds out that the subscriber corresponding to the subscriber identifier included in the message is not a subscriber to the particular network. The message centre MMSC1 thus sends 2 the message further to the gateway MMSGW. Next, the gateway performs an interrogation to the signalling gateway as described in connection with Figure 1 and thus becomes informed of the fact that the message is to be routed to the message centre MMSC2.

After the message centre MMSC2 has received 3 the message, it relays 4 the message further to a WAP gateway Wireless Application Protocol Push Proxy GW or WAPGW2. Through a short message service centre SMSC2 the WAP gateway WAPGW2 sends 5 a WAP-Push short message to the mobile station MS2, the short message indicating to the user of the mobile station MS2 that a multimedia message has arrived. Next, the user of the mobile station MS2 may, through the mobile station, retrieve 6 the multimedia message from the WAP gateway WAPGW2 e.g. through a GPRS connection.

After the user has retrieved the multimedia message, the message centre MMSC2 sends 7 a delivery report which is relayed via the gateway MMSGW and the message centre MMSC1 to the WAP gateway WAPGW1. Finally, the WAP gateway WAPGW1 relays 8 the delivery report to the mobile station MS1 via a short message service centre SMSC1 so that the user of the mobile station MS1 becomes informed of the fact that the mobile station MS2 has received the multimedia message.

It is to be understood that the above description and the related drawings are only intended to illustrate the present invention. It will be obvious to one skilled in the art that the invention may be varied and modified in many different ways without deviating from the scope of the invention disclosed in the attached claims.

## Claims

1. A method for routing a message which includes a receiver's subscriber identifier from a message centre, **characterized by**
sending the message to be routed to a gateway,
performing an interrogation to subscriber registers through a signalling network to identify a network of a subscriber corresponding to the subscriber identifier included in the message received by the gateway, and
sending the message from the gateway further to a message centre of the identified network.

2. A method as claimed in claim 1**, characterized by** prior to sending the message to be routed from the message centre to the gateway,
checking from a subscriber register corresponding to the message centre whether or not the particular subscriber register is the subscriber register of the subscriber corresponding to the subscriber identifier, and
sending the message to be routed to the gateway if the checking indicates that the subscriber register corresponding to the message centre is not the subscriber register of the subscriber corresponding to the subscriber identifier.

3. A telecommunication system comprising:
message centres (MMSC1 to MMSC4) which provide subscribers with message services,
subscriber registers (HLR1 to HLR4) to maintain subscriber information, and
a signalling network (SS7) connected to the subscriber registers, **characterized in that** the system further comprises:
a signalling gateway (SGW) which, in response to a received subscriber identifier, performs an interrogation to the subscriber registers (HLR1 to HLR4) through the signalling network to identify a network of a subscriber corresponding to said subscriber identifier, and
a gateway (MMSGW) which relays messages between the message centres (MMSC1 to MMSC4) and which, to route the message to a correct message centre, performs an interrogation to the signalling gateway (SGW) in response to receiving a message including a receivers subscriber identifier to identify the network of the subscriber corresponding to the subscriber identifier, and sends the message to a message centre (MMSC4) of the identified network.

4. A telecommunication system as claimed in claim 3, **characterized in that** at least one of the message centres (MMSC1 to MMSC4) is configured to
check from a corresponding subscriber register (HLR1 to HLR4) whether or not the particular subscriber register is the subscriber register of a subscriber corresponding to the subscriber identifier included in the message to be sent, and
send the message to the gateway (MMSGW) to be relayed further if the checking indicates that the particular corresponding subscriber register is not the subscriber register of the subscriber corresponding to the subscriber identifier.

5. A telecommunication system as claimed in claim 3 or 4, **characterized in that** the messages are multimedia messages, the message centres (MMSC1 to MMSC4) are multimedia message centres, and the gateway (MMSGW) is a multimedia message gateway.

6. A telecommunication system gateway which relays messages between message centres, **characterized in that** the gateway (MMSGW) is configured to
receive a message which includes a subscriber identifier from a message centre (MMSC1 to MMSC4),
route the received message to a correct message centre (MMSC4) by performing an interrogation to a signalling gateway (MMSC4) to identify a network of a subscriber corresponding to the subscriber identifier, and
send the message to a message centre (MMSC4) of the identified network.

7. A gateway as claimed in claim 6, **characterized in that**
the gateway (MMSGW) comprises a memory (M) wherein operators of the message centres may, through a user interface, operator-specifically define contract rules concerning relaying of messages between the message centres (MMSC1 to MMSC4) of different operators, and
the gateway (MMSGW) is configured to check from the memory (M) whether or not it is allowed to send a message received from the centre of a particular operator to a message centre of another particular operator, and send the message to the message centre of the second operator only if the contract rules stored in the memory (M) indicate that both the first and the second operator have allowed messages to be relayed between the message centres of the first and the second operator.
